# EUROPÄISCHE PATENTSCHRIFT

(11) **EP 0 912 438 B1**
(45) Veröffentlichungstag und Bekanntmachung des Hinweises auf die Patenterteilung: **09.05.2001**
(21) Anmeldenummer: 97929110.1
(22) Anmeldetag: 18.06.1997
(51) Int. Cl.: B65H 45/16, B41F 13/64

(54) **GETRIEBE**
SET OF GEARS
TRAIN D'ENGRENAGES

(30) Priorität: 22.06.1996 DE 19625083
(43) Veröffentlichungstag der Anmeldung: 06.05.1999
(73) Patentinhaber: Koenig & Bauer Aktiengesellschaft, 97080 Würzburg (DE)
(72) Erfinder: KOSTIZA, Simon, D-67136 Fussgönheim (DE)
(86) Internationale Anmeldenummer: DE9701238
(87) Internationale Veröffentlichungsnummer: WO9749629

(56) Entgegenhaltungen:
- EP-A- 0 355 595
- DE-A- 4 316 352
- DE-A- 4 426 987
- GB-A- 1 122 405
- US-A- 5 415 595

## Beschreibung

Die Erfindung betrifft ein Getriebe zum Verstellen einer Phasenlage von einer Mehrzahl umlaufender Antriebsmittel gemäß dem Oberbegriff des Anspruches 1.

Die DE-AS 19 43 579 beschreibt eine Vorrichtung zur Registereinstellung an Offsetdruckmaschinen während des Betriebes. Hierbei kämmt ein koaxial zum Gummizylinder gelagerter Zahnkranz mit einem fest am Plattenzylinder sitzenden Zahnkranz und einem fest am Gegendruckzylinder sitzenden Zahnkranz.

Der Zahnkranz des Gummizylinders bildet ein Sonnenrad, mit dem ein verstellbares Planetenrad kämmt. Koaxial zum Gummizylinder ist ein zweiter Zahnkranz drehbar gelagert, der über zwei drehfest miteinander verbundene Zahnräder in Wirkverbindung steht.

Aus der DE 38 14 927 C1 ist ein Zwischengetriebe in Druckmaschinen zum Verstellen der Phasenlage der axialen Verreibungsbewegung von Reibwalzen mittels eines Planetenradgetriebes bekannt.

Die US-A-54 15 595 offenbart eine Getriebeanordnung zur Phasenverstellung mit zwei Planetenradgetrieben. Diese beiden Planetenradgetriebe sollen autretendes Zahnspiel minimieren.

Der Erfindung liegt die Aufgabe zugrunde ein Getriebe zum Verstellen einer Phasenlage von einer Mehrzahl umlaufender Antriebsmittel zu schaffen.

Diese Aufgabe wird erfindungsgemäß durch die Merkmale des kennzeichnenden Teiles des Anspruches 1 gelöst.

Die mit der Erfindung erzielbaren Vorteile bestehen insbesondere darin, daß bei dem erfindungsgemäßen Getriebe eine unbegrenzte Phasenverstellung von beispielsweise drehenden Deckkurvenscheiben möglich ist. Diese Phasenverstellung kann stufenlos und bei drehendem Getriebe erfolgen.
Durch Anordnung des Planetenradgetriebes auf einer zweiten, parallel zu einer ersten Drehachse beispielsweise eines Zylinders verlaufenden Achse wird der Zugang eines Zylinderzapfens ermöglicht. Dies erlaubt eine stabile Lagerung des Zylinderzapfens und das Planetenradgetriebe kann auch auf einer mit einem Antrieb versehenen Seite des Zylinders angeordnet sein. Sind mehrere umlaufende Deckkurvenscheiben vorgesehen, ist die Anordnung der zugeordneten Planetenradgetriebe koaxial hintereinander auf einer Welle vorteilhaft, da dies eine sehr kompakte Bauweise ermöglicht.
Ist das Planetenradgetriebe als "Harmonic-Drive"-Getriebe ausgebildet, ist eine besonders feinfühlige Verstellung möglich, da diese Getriebe eine große Untersetzung auf kleinstem Raum ermöglichen. Zudem sind im Vergleich zu z. B. einem herkömmlichen Planetenradgetriebe eine Drehzahl des Planetenrades gering und eine Zahnüberdeckung sehr hoch, was den Verschleiß minimiert.
Vorteilhaft ist außerdem, daß das Planetenradgetriebe bzw. das "Harmonic-Drive"-Getriebe vom Antrieb des Zylinders angetrieben wird, so daß kein zusätzlicher Antrieb notwendig ist.

Das erfindungsgemäße Getriebe ist in der Zeichnung dargestellt und wird im folgenden näher beschrieben.

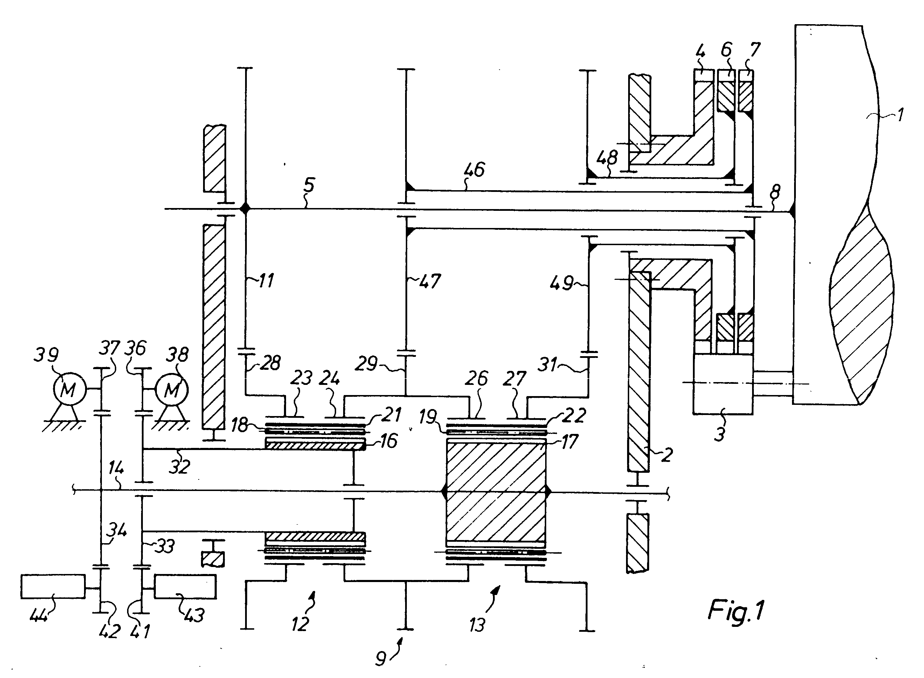

Es zeigen
- Fig. 1: eine schematische Darstellung eines Sammel- und Falzzylinders mit zugeordneten "Harmonic-Drive"-Getrieben;

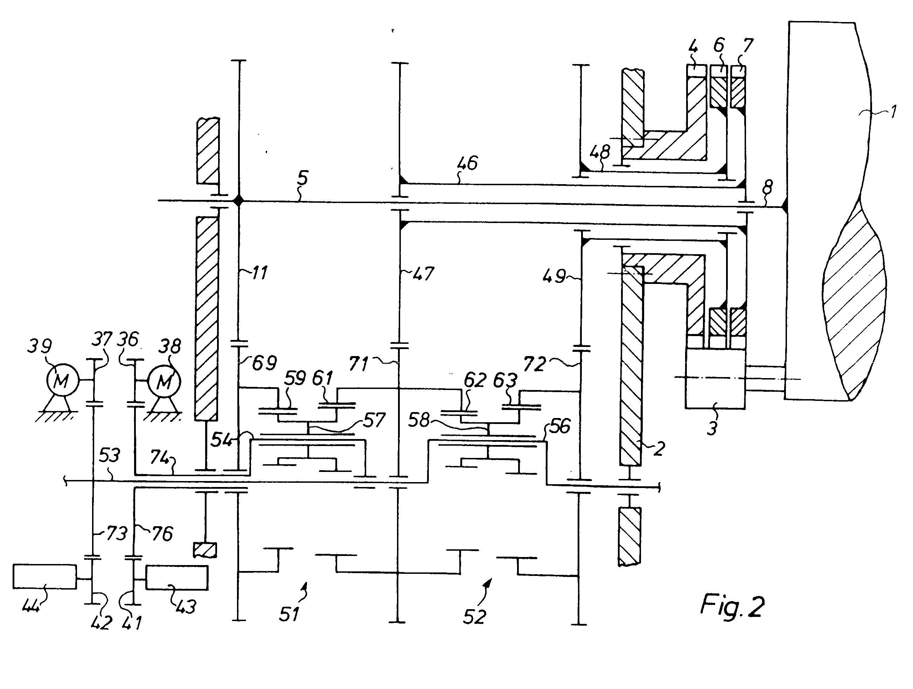

- Fig. 2: eine schematische Darstellung des Sammel- und Falzzylinders mit zugeordneten Planetenradgetrieben.

Ein nicht näher dargestellter Sammel- und Falzzylinder 1 für einen Falzapparat einer Rotationsdruckmaschine ist in Seitengestellen 2 gelagert und mit Bearbeitungsmitteln, z. B. mit an sich bekannten Punkturnadeln und Falzmessern versehen. Diese auf Wellen angeordneten Punkturnadeln und Falzmesser werden mittels Kurvenrollen 3 bewegt. Die Kurvenrollen 3 werden von Kurvenscheiben 4, 6, 7 angesteuert. Anstelle der Kurvenscheiben 4, 6, 7 und Kurvenrolle 3 können auch andere Antriebsmittel, wie z. B. Zahnräder vorgesehen sein.
Im vorliegenden Beispiel sind zur Vereinfachung nur die Kurvenrolle 3 und Kurvenscheiben 4, 6, 7 der Punkturnadeln dargestellt. Die Kurvenrolle und die Kurvenscheiben der Falzmesser können wie im vorliegenden Beispiel an dem axial gegenüberliegenden Ende des Sammel- und Falzzylinders 1 angeordnet und mit einem entsprechenden Verstellgetriebe versehen sein. Es ist aber auch möglich die Kurvenscheiben 4, 6, 7 der Punkturnadeln und Falzmesser zu koppeln und gemeinsam auf einer Seite des Sammel- und Falzzylinders 1 anzuordnen.

Eine der drei Kurvenscheiben 4, 6, 7 ist im dargestellten Ausführungsbeispiel als gestellfeste Grundkurvenscheibe 4 und die anderen beiden Kurvenscheiben 6, 7 sind als drehende Deckkurvenscheiben 6, 7 ausgeführt. Diese Grundkurvenscheibe 4 und die beiden Deckkurvenscheiben 6, 7 sind koaxial zu einer Drehachse 5, d. h. zu einem Zylinderzapfen 8 des Sammelund Falzzylinders 1 gelagert. Die Grundkurvenscheibe 4 kann auch beispielsweise zur Durchführung eines ersten Querfalzes oder eines Deltafalzes in zwei verschiedene, während des Betriebes gestellfeste Grundstellungen gebracht werden.
Die Deckkurvenscheiben 6, 7 werden von einem Getriebe 9 angetrieben. Mit diesem Getriebe 9 kann die Phasenlage jeder der Deckkurvenscheiben 6, 7 bezüglich des Sammelund Falzzylinders 1 verstellt werden, d. h. das Getriebe 9 ist als Phasenverstellgetriebe ausgeführt.
Der Antrieb des Getriebes 9 und des Sammel- und Falzzylinders 1 erfolgt über ein drehfest mit dem Zylinderzapfen 8 verbundenes Zahnrad 11 mit einer Zähnezahl z11, z. B. z11 = 150.

In einem ersten Ausführungsbeispiel ist in dem Getriebe 9 jeder Deckkurvenscheibe 6, 7 ein als "Harmonic-Drive" ausgebildetes Planetenradgetriebe 12, 13 zugeordnet. Diese beiden "Harmonic-Drive"-Getriebe 12, 13 sind bezüglich einer Welle 14 koaxial hintereinander angeordnet. Jedes dieser Getriebe 12, 13 besteht im wesentlichen aus einer elliptischen Nockenscheibe ("Wave-Generator") 16, 17 mit einem auf Zylinderrollen 18, 19 gelagerten, flexiblen Planetenrad 21, 22 ("Flexspline") mit einer Zähnezahl z21, z22, z. B. z21, z22 = 160, und zwei jeweils mit einer Innenverzahnung versehenen Sonnenrädern 23, 24, 26, 27 ("Dynamic Spline" bzw. "Circular Spline").

Eine Breite b21 bzw. b22 des flexiblen Planetenrades 21, 22 ist derart gewählt, daß das Planetenrad 21 bzw. 22 gleichzeitig in die zugeordneten Sonnenräder 23, 24 bzw. 26, 27 eingreift.
Das erste Sonnenrad 23 mit einer Zähnezahl z23, z. B. z23 = 161, ist drehsteif mit einem in das Zahnrad 11 eingreifenden Zahnrad 28, mit einer Zähnezahl z28, z. B. z28 = 99, und das zweite Sonnenrad 24 mit einer Zähnezahl z24, z. B. z24 = 160, ist mit einem Zahnrad 29 mit einer Zähnezahl z29, z. B. z29 = 88, verbunden. Mittels dieses Zahnrades 29 wird das zweite "Harmonic-Drive"-Getriebe 13 angetrieben, weshalb dieses Zahnrad 29 auch gleichzeitig mit dem ersten, eine Zähnezahl z26, z. B. z26 = 160, aufweisenden Sonnenrad 26 des zweiten "Harmonic-Drive"-Getriebes 13 drehsteif verbunden ist. An dem zweiten Sonnenrad 27 mit einer Zähnezahl z27, z. B. z27 = 161, des zweiten "Harmonic-Drive"-Getriebes 13 ist ein Zahnrad 31 mit einer Zähnezahl z31, z. B. z31 = 88, angebracht.

Die Nockenscheibe 17 des zweiten "Harmonic-Drive"-Getriebes 13 ist mit der im Seitengestell 2 drehbar gelagerten Welle 14 drehsteif verbunden. Ein erstes Ende der Welle 14 ist im Seitengestell 2 gelagert und ein zweites Ende der Welle 14 ist mit einem Zahnrad 34 versehen. Koaxial zur Welle 14 ist eine Hohlwelle 32 drehbar gelagert, an deren erstem Ende die Nockenscheibe 16 des ersten "Harmonic-Drive"-Getriebes 12 und an deren zweitem Ende ein Zahnrad 33 fest angeordnet ist.
In das Zahnrad 33 bzw. 34 greifen jeweils ein Zahnrad 36 bzw. 37 eines Antriebs, z. B. Elektromotors 38 bzw. 39 und ein Zahnrad 41 bzw. 42 eines Positionssensors, z. B. eines Potentiometers 43 bzw. 44, ein.

Auf dem Zylinderzapfen 8 des Sammel- und Falzzylinders 1 ist eine erste Hohlwelle 46 koaxial drehbar gelagert. Diese Hohlwelle 46 ist an ihrem ersten Ende mit der zweiten Deckscheibe 7 und an ihrem zweiten Ende mit einem Zahnrad 47 mit einer Zähnezahl z47, z. B. z47 = 161 verbunden. Das Zahnrad 47 greift in das mit den Sonnenrädern 24, 26 verbundene Zahnrad 29 ein. Koaxial zu der ersten Hohlwelle 46 ist eine zweite Hohlwelle 48 unabhängig drehbar gelagert. An einem ersten Ende der Hohlwelle 48 ist die erste Deckscheibe 6 und an ihrem zweiten Ende ist ein Zahnrad 49 mit einer Zähnezahl z49, z. B. z49 = 160 angeordnet. Dieses Zahnrad 49 greift in das Zahnrad 31 ein, das mit dem Sonnenrad 27 des zweiten "Harmonic-Drive"-Getriebes 13 verbunden ist.

Die Funktionsweise des Getriebes 9 zur Phasenverstellung von Deckscheiben 6, 7 ist folgendermaßen:

Das von einem nicht dargestellten Antrieb bewegte Zahnrad 11 treibt sowohl den Falz- und Sammelzylinder 1 als auch über das Zahnrad 28 das erste Sonnenrad 23 des ersten "Harmonic-Drive"-Getriebes 12 an. Dieses Sonnenrad 23 steht im Eingriff mit dem flexiblen Planetenrad 21, welches dadurch rotiert. Die Nockenscheibe 16 verformt während der Rotation das Planetenrad 21 elliptisch, das gleichzeitig mit dem zweiten, mit einer sich von der Zähnezahl z23 des ersten Sonnenrades 24 geringfügig unterscheidende Zähnezahl z24 aufweisenden Sonnenrad 24 zusammenwirkt. Dadurch wird eine Relativdrehung der beiden Sonnenräder 23, 24 bewirkt.
Gleichzeitig treibt das Zahnrad 29 auch das erste Sonnenrad 26 des zweiten "Harmonic-Drive"-Getriebes 13 an. Auch dieses Sonnenrad 26 versetzt das Planetenrad 22 in Rotation.
Durch einen hohen Bereich der Nockenscheibe 16, 17 wird das flexible Planetenrad 21, 22 in Eingriff mit den Sonnenrädern 23, 24, 26, 27 gebracht. Damit ergibt sich eine "virtuelle" Drehachse, die exzentrisch zur Welle 14 liegt. Durch diese Verformung und Drehung des flexiblen Planetenrades 21, 22 bewegen sich die beiden Sonnenräder 23, 24, 26, 27 relativ zueinander.
Die Zähnezahlen des jeweiligen einer Deckkurvenscheibe 6, 7 zugeordneten Zahnradzuges sind derart aufeinander angepaßt, daß sich ein gewünschtes Gesamtübersetzungsverhältnis i6 bzw. i7 ergibt. Im vorliegenden Ausführungsbeispiel ist i6 gleich i7 und beträgt i6 = i7 = 1,2
(i6 = z28/z11*z24/z23*z47/z29 = 99/150*160/161*161/88; i7 = z28/z11*z24/z23*z27/z26*z49/z31 = 99/150*160/161*161/160*160/88). Es sind aber beliebige Werte der übersetzungsverhältnisse i6, i7 möglich, beispielsweise können i6 und i7 auch unterschiedlich groß oder gleich 1 sein.

Ist eine Phasenverstellung einer der beiden oder beider Deckkurvenscheiben 6, 7 zur Grundkurvenscheibe 4 notwendig, um beispielsweise von einer ersten Betriebsart "Nichtsammeln" auf eine zweite Betriebsart "Sammeln" des Sammel- und Falzzylinders 1 umzustellen, wird mittels der Elektromotoren 38, 39 die Nockenscheibe 16, 17 in Umfangsrichtung verdreht. Somit wird das erste Sonnenrad 23, 26 bezüglich des zweiten Sonnenrades 24, 27 relativ verdreht und eine Phasenverstellung der Deckkurvenscheibe 6, 7 zur Grundkurvenscheibe 4 bewirkt.

Wird im vorliegenden Beispiel die erste Deckkurvenscheibe 6 phasenverstellt, wird auch die zweite Deckkurvenscheibe 7 geringfügig mitverstellt, da die beiden Sonnenräder 24, 26 über das Zahnrad 29 gekoppelt sind. Diese geringfügige Phasenverstellung kann aber automatisch über einen die Elektromotoren 38, 39 ansteuernden Rechner kompensiert werden, der den zweiten Elektromotor 39 entsprechend korrigiert.

In einem zweiten Ausführungsbeispiel sind anstelle der "Harmonic-Drive"-Getriebe 12, 13 "konventionelle" Planetenradgetriebe 51, 52 vorgesehen.
Auch hier sind die beiden Planetenradgetriebe 51, 52 sind bezüglich einer Welle 53 koaxial hintereinander angeordnet. Jedes dieser Getriebe 51, 52 besteht jeweils im wesentlichen aus einer exzentrischen als Schwinge 54, 56 ausgebildete Drehachsen mit einem darauf drehbar gelagerten Planetenrad 57, 58 und zwei jeweils mit einer Innenverzahnung versehenen Sonnenrädern 59, 61, 62, 63.

Die jeweils eine Zähnezahl z57, z. B. z57 = 20, bzw. z58, z. B. z58 = 20, aufweisenden Planetenräder 57, 58 sind mit einer Außenverzahnung versehen.
Eine Breite b57 bzw. b58 des Planetenrades 57, 58 ist derart ausgebildet, daß das Planetenrad 57 bzw. 58 gleichzeitig in die zugeordneten, eventuell mit einer Zahnkorrektur versehenen Sonnenräder 59, 61 bzw. 62, 63 eingreift.
Es ist aber auch möglich das Planetenrad 57, 58 mit zwei unterschiedliche Zähnezahlen aufweisenden Verzahnungen zu versehen.

Das erste Sonnenrad 59 mit einer Zähnezahl z59, z. B. z59 = 161, ist drehsteif mit einem in das Zahnrad 11 eingreifenden Zahnrad 69, mit einer Zähnezahl z69, z. B. z69 = 99, und das zweite Sonnenrad 61 mit einer Zähnezahl z61, z. B. z61 = 160, ist mit einem Zahnrad 71 mit einer Zähnezahl z71, z. B. z71 = 88, verbunden. Mittels dieses Zahnrades 71 wird das zweite Planetenradgetriebe 52 angetrieben, weshalb dieses Zahnrad 71 auch gleichzeitig mit dem ersten Sonnenrad 62 mit einer Zähnezahl z62, z. B. z62 = 160 des zweiten Planetenradgetriebes 52 drehsteif verbunden ist. An dem zweiten Sonnenrad 63 mit einer Zähnezahl z63, z. B. z63 = 161, des zweiten Planetenradgetriebes 52 ist ein Zahnrad 72 mit einer Zähnezahl z72, z. B. z72 = 88 angebracht.

In die Zahnräder 71, 72 greifen gemäß dem ersten Ausführungsbeispiel beispielsweise die Zahnräder 47, 49 der zugeordneten Deckkurvenscheiben 6, 7 ein.

Die Schwinge 56 des zweiten Planetenradgetriebes 52 ist mit der im Seitengestell 2 drehbar gelagerten Welle 53 drehsteif verbunden. Ein erstes Ende der Welle 53 ist im Seitengestell 2 gelagert und ein zweites Ende der Welle 53 ist mit einem Zahnrad 73 versehen. Koaxial zur Welle 53 ist eine Hohlwelle 74 drehbar gelagert, an deren erstem Ende die Schwinge 54 des ersten Planetenradgetriebes 51 und an deren zweitem Ende ein Zahnrad 76 fest angeordnet ist.
Mit dem Zahnrad 73 bzw. 76 wirkt jeweils ein Positionierantrieb entsprechend dem ersten zusammen.
Die Phasenverstellung der Deckkurvenscheiben 6, 7 erfolgt durch Verdrehen der gewünschten Schwinge 54, 56 mittels der Welle 53 bzw. der Hohlwelle 74 mit den daran angreifenden Positionierantrieben.

Die Phasenverstellung der Deckscheiben 6, 7 kann somit stufenlos und ohne Begrenzung erfolgen.
Diese Phasenverstellung wird sowohl bei den "Harmonic-Drive"-Getrieben 12, 13 als auch bei den "konventionellen" Planetenradgetrieben 51, 52 dadurch erreicht, daß eine Lage eines Eingriffsbereiches von dem ansonsten ortsfesten Planetenrad 21, 22, 57, 58 und den zugeordneten Sonnenrädern 23, 24, 26, 27, 59, 61, 62, 63 in Umfangsrichtung veränderbar ist. Dies wird durch Verstellung der Schwinge 54, 56 bzw. der Nockenscheibe 16, 17 in Umfangsrichtung erreicht.

Das übersetzungsverhältnis zwischen Planetenrad 21, 22, 57, 58 und zugeordneten Sonnenrädern 23, 24 bzw. 26, 27 bzw. 59, 61 bzw. 62, 63 ist ungleich eins.

Die Anzahl der koaxial hintereinander angeordneten Planetenradgetriebe 12, 13, 51, 52 kann beliebig groß sein.

Der Antrieb der Planetenradgetriebe 12, 13, 51, 52 erfolgt vom Sammel- und Falzzylinder 1 beispielsweise mittels des Zahnrades 11.

Es ist aber auch möglich, Planetenradgetriebe bzw. "Harmonic-Drive"-Getriebe auf mehreren Wellen, die jeweils parallel zur Drehachse 5 des Sammel- und Falzzylinders 1 verlaufen, anzuordnen. Dabei erfolgt deren Antrieb von dem Zahnrad 11 des Sammel- und Falzzylinders 1.

Bezugszeichenliste
- 1: Sammel- und Falzzylinder
- 2: Seitengestell
- 3: Kurvenrolle
- 4: Kurvenscheibe, Grundkurvenscheibe
- 5: Drehachse (1)
- 6: Kurvenscheibe, Deckkurvenscheibe
- 7: Kurvenscheibe, Deckkurvenscheibe
- 8: Zylinderzapfen
- 9: Getriebe
- 10: -
- 11: Zahnrad
- 12: Planetenradgetriebe, "Harmonic-Drive"-Getriebe
- 13: Planetenradgetriebe, "Harmonic-Drive"-Getriebe
- 14: Welle
- 15: -
- 16: Nockenscheibe (11)
- 17: Nockenscheibe (12)
- 18: Zylinderrollen (11)
- 19: Zylinderrollen (12)
- 20: -
- 21: Planetenrad (11)
- 22: Planetenrad (12)
- 23: Sonnenrad, erstes (11)
- 24: Sonnenrad, zweites (11)
- 25: -
- 26: Sonnenrad, erstes (12)
- 27: Sonnenrad, zweites (12)
- 28: Zahnrad
- 29: Zahnrad
- 30: -
- 31: Zahnrad
- 32: Hohlwelle
- 33: Zahnrad
- 34: Zahnrad
- 35: -
- 36: Zahnrad (38)
- 37: Zahnrad (39)
- 38: Antriebsmotor
- 39: Antriebsmotor
- 40: -
- 41: Zahnrad (43)
- 42: Zahnrad (44)
- 43: Potentiometer
- 44: Potentiometer
- 45: -
- 46: Hohlwelle, erste
- 47: Zahnrad
- 48: Hohlwelle, zweite
- 49: Zahnrad
- 50: -
- 51: Planetenradgetriebe
- 52: Planetenradgetriebe
- 53: Welle
- 54: Schwinge
- 55: -
- 56: Schwinge
- 57: Planetenrad
- 58: Planetenrad
- 59: Sonnenrad, erstes (51)
- 60: -
- 61: Sonnenrad, zweites (51)
- 62: Sonnenrad, erstes (52)
- 63: Sonnenrad, zweites (52)
- 64: -
- 65: -
- 66: -
- 67: -
- 68: -
- 69: Zahnrad
- 70: -
- 71: Zahnrad
- 72: Zahnrad
- 73: Zahnrad
- 74: Hohlwelle
- 75: -
- 76: Zahnrad
- b21: Breite
- b22: Breite
- b57: Breite
- b58: Breite

- i6: übersetzungsverhältnis
- i7: übersetzungsverhältnis
- z11: Zähnezahl
- z21: Zähnezahl
- z22: Zähnezahl
- z23: Zähnezahl
- z24: Zähnezahl
- z26: Zähnezahl
- z27: Zähnezahl
- z28: Zähnezaht
- z29: Zähnezaht
- z31: Zähnezahl
- z47: Zähnezahl
- z49: Zähnezahl
- z57: Zähnezahl
- z58: Zähnezahl
- z59: Zähnezahl
- z61: Zähnezahl
- z62: Zähnezahl
- z63: Zähnezahl
- z64: Zähnezahl
- z69: Zähnezaht
- z71: Zähnezahl
- z72: Zähnezahl

## Patentansprüche

1. Getriebe zum Verstellen einer Phasenlage von einer Mehrzahl umlaufender Antriebsmittel (6; 7) bezüglich eines Antriebes (11), wobei die Antriebsmittel (6; 7) auf einer ersten Drehachse (5) koaxial zueinander gelagert sind, dadurch gekennzeichnet, daß zum Antrieb für jedes umlaufende Antriebsmittel (6; 7) ein eigenes Planetenradgetriebe (12; 13; 51; 52) vorgesehen ist, daß zum Verstellen einer Phasenlage eines ersten relativ zu einem zweiten umlaufenden Antriebsmittels (6; 7) die Lage des Zahneingriffes von Planetenrad (21; 22; 57; 58) und darin eingreifenden Sonnenrädern (23, 24; 26, 27; 59, 61; 62, 63) des zugeordneten Planetenradgetriebes (12; 13; 51; 52) mittels Stellmittel (38; 39) veränderbar ist, daß die Planetenradgetriebe (12; 13; 51; 52) auf einer zweiten, parallel zur ersten Drehachse (5) verlaufenden Welle (14; 53) koaxial hintereinander angeordnet sind.

2. Getriebe nach Anspruch 1, dadurch gekennzeichnet, daß das Planetenradgetriebe (12; 13; 51; 52) jeweils im wesentlichen aus zwei innenverzahnten Sonnenrädern (23, 24; 26, 27; 59, 61; 62, 63), einem drehbaren Planetenrad (21, 22, 57, 58) besteht, wobei das Planetenrad (21, 22, 57, 58) gleichzeitig in beide Sonnenräder (23, 24; 26, 27; 59, 61; 62, 63) eingreift und daß das Planetenradgetriebe (12; 13; 51; 52) ein übersetzungsverhältnis ungleich eins aufweist.

3. Getriebe nach den Ansprüchen 1 und 2, dadurch gekennzeichnet, daß jeweils das zweite Sonnenrad (24; 61) des vorgeordneten Planetenradgetriebes (12; 51) mit dem ersten Sonnenrad (26; 62) des nachfolgenden Planetenradgetriebes (13; 52) verbunden ist.

4. Getriebe nach Anspruch 3, dadurch gekennzeichnet, daß das zweite Sonnenrad (24; 61) mit dem ersten Sonnenrad (26; 62) mittels eines Antriebsmittels (29; 71) für ein umlaufendes Antriebsmittel (6) verbunden ist.

5. Getriebe nach Anspruch 1, dadurch gekennzeichnet, daß die umlaufenden Antriebsmittel (6; 7) als Deckkurvenscheiben (6; 7) eines Sammel- und Falzzylinders (1) ausgebildet sind.

6. Getriebe nach Anspruch 1, dadurch gekennzeichnet, daß das Planetenradgetriebe (12; 13) eine elliptische Nockenscheibe (16; 17), ein flexibles Planetenrad (21; 22) und zwei innenverzahnte Sonnenräder (23; 24; 26; 27), dh ein "Harmonic-Drive"-Getriebe aufweist.

## Claims

1. Gear unit for adjusting a phase relationship of a plurality of rotating drive means (6; 7) with respect to a drive (11), the drive means (6; 7) being mounted coaxially to one another on a first axis of rotation (5), characterized in that, for the drive, each rotating drive means (6; 7) is provided with its own planetary gear unit (12; 13; 51; 52), in that, to adjust a phase relationship of a first rotating drive means (6; 7) relative to a second, the position of the tooth engagement of the planet wheel (21; 22; 57; 58) and of sun wheels (23, 24; 26, 27; 59, 61; 62, 63), engaging therein, of the associated planetary gear units (12; 13; 51; 52) is variable by actuating means (38; 39), and in that the planetary gear units (12; 13; 51; 52) are arranged coaxially one behind the other on the second shaft (14; 53) running parallel to the first axis of rotation (5).

2. Gear unit according to Claim 1, characterized in that the planetary gear unit (12; 13; 51; 52) consists in each case essentially of two internally toothed sun wheels (23, 24; 26, 27; 59, 61; 62, 63) and of a rotatable planet wheel (21, 22, 57, 58), the planet wheel (21, 22, 57, 58) engaging simultaneously into both sun wheels (23, 24; 26, 27; 59, 61; 62, 63), and in that the planetary gear unit (12; 13; 51; 52) has a transmission ratio unequal to one.

3. Gear unit according to Claims 1 and 2,
characterized in that the second sun wheel (24; 61) of the preceding planetary gear unit (12; 51) is in each case connected to the first sun wheel (26; 62) of the following planetary gear unit (13; 52).

4. Gear unit according to Claim 3, characterized in that the second sun wheel (24; 61) is connected to the first sun wheel (26; 62) by a drive means (29; 71) for a rotating drive means (6).

5. Gear unit according to Claim 1, characterized in that the rotating drive means (6; 7) are designed as covering cam discs (6; 7) of a collecting and folding cylinder (1).

6. Gear unit according to Claim 1, characterized in that the planetary gear unit (12; 13) has an elliptical cam plate (16; 17), a flexible planet wheel (21; 22) and two internally toothed sun wheels (23; 24; 26; 27), that is to say a "harmonic-drive" gear unit.

## Revendications

1. Transmission pour le réglage d'une position en phase, d'une pluralité de moyens d'entraînement (6 ; 7) en rotation, par rapport à un entraînement (11), les moyens d'entraînement (6 ; 7) étant montés à rotation, coaxialement les uns aux autres, sur un premier axe de rotation (5), caractérisée en ce que, pour assurer l'entraînement de chaque moyen d'entraînement (6 ; 7) en rotation, est prévue une transmission à roues planétaires (12 ; 13 ; 51 ; 52) propre, en ce que, pour assurer le réglage d'une position en phase d'un premier moyen d'entraînement (6 ; 7) tournant par rapport à un deuxième moyen d'entraînement, la position de l'engrènement par denture de la roue planétaire (21 ; 22 ; 57; 58) et des roues solaires (23, 24 ; 26, 27 ; 59, 61; 62, 63) s'y engrenant, appartenant à la transmission à roues planétaires (12 ; 13 ; 51 ; 52) associée, est modifiable à l'aide de moyens de réglage (38 ; 39), en ce que les transmissions à roues planétaires (12 ; 13 ; 51 ; 52) sont disposées coaxialement les unes derrière les autres sur un deuxième arbre (14 ; 53), s'étendant parallèlement au premier axe de rotation (5).

2. Transmission selon la revendication 1, caractérisée en ce que la transmission à roues planétaires (12 ; 13 ; 51 ; 52) est constituée chaque fois essentiellement de deux roues solaires (23, 24 ; 26, 27 ; 59, 61 ; 62, 63) à denture intérieure, d'une roue planétaire (21, 22, 57, 58) susceptible de tourner, la roue planétaire (21, 22, 57, 58) s'entraînant simultanément dans les deux roues solaires (23, 24 ; 26, 27 ; 59, 61 ; 62, 63), et en ce que la transmission à roues planétaires (12 ; 13 ; 51 ; 52) présente un rapport de transmission différent de un.

3. Transmission selon les revendications 1 et 2, caractérisée en ce que chaque fois la deuxième roue solaire (24 ; 61) de la transmission à roues planétaires (12 ; 51) amont est reliée à la première roue solaire (26 ; 62) de la transmission à roues planétaires (13 ; 52) aval.

4. Transmission selon la revendication 3, caractérisée en ce que la deuxième roue solaire (24 ; 61) est reliée à la première roue solaire (26 ; 62) à l'aide d'un moyen d'entraînement (29 ; 71) pour un moyen d'entraînement (6) en rotation.

5. Transmission selon la revendication 1, caractérisée en ce que les moyens d'entraînement (6 ; 7) en rotation sont réalisés sous la forme de disques à came à couverture (6 ; 7) d'un cylindre collecteur et de pliage (1).

6. Transmission selon la revendication 1, caractérisée en ce que la transmission à roues planétaires (12 ; 13) présente un disque de came (16 ; 17) elliptique, une roue planétaire (21 ; 22) flexible et deux roues solaires (23 ; 24 ; 26 ; 27) à tenture intérieure, c'est-à-dire une transmission "harmonic-drive".
